# FASCICULE DE BREVET EUROPEEN

(11) **EP 2 956 709 B1**
(45) Date de publication et mention de la délivrance du brevet: **14.08.2019**
(21) Numéro de dépôt: 14710007.7
(22) Date de dépôt: 14.02.2014
(51) Int. Cl.: F21S 41/43, F21S 45/10

(54) **ÉCRAN MULTIFONCTION POUR UN BLOC OPTIQUE MULTIFONCTION DE VÉHICULE**
MULTIFUNKTIONSBILDSCHIRM FÜR EINE OPTISCHE MULTIFUNKTIONSEINHEIT EINES FAHRZEUGS
MULTIFUNCTION SCREEN FOR A VEHICLE MULTIFUNCTION OPTICAL UNIT

(30) Priorité: 15.02.2013 FR 1351305
(43) Date de publication de la demande: 23.12.2015
(73) Titulaire: PSA Automobiles SA, 78300 Poissy (FR); Valeo Vision, 93012 Bobigny (FR)
(72) Inventeur: PERON, Rodolphe, F-95220 Herblay (FR); HONNET, Nicolas, F-37140 La Chapelle sur Loire (FR); THIBAULT, Christian, F-53290 Bouessay (FR); CHIRON, Jérôme, F-49125 Tierce (FR)
(86) Numéro de dépôt international: PCT/FR2014/050302
(87) Numéro de publication internationale: WO 2014/125226

(56) Documents cités:
- EP-A2- 0 961 074
- EP-A2- 2 184 532
- DE-A1- 19 853 872
- FR-A1- 2 941 282
- US-A1- 2004 042 230
- US-A1- 2006 120 094
- US-A1- 2009 116 258

## Description

L'invention concerne les blocs optiques multifonctions de véhicule, éventuellement de type automobile, et plus précisément ceux qui sont situés à l'avant des véhicules, comme divulgués dans le document FR 2941282.

Certains blocs optiques multifonctions avant de véhicule comprennent un boîtier dans lequel sont installés à proximité l'une de l'autre une lampe (ou ampoule) et un ensemble de diodes électroluminescentes (ou LEDs) qui sont propres à délivrer respectivement des première et seconde lumières pour assurer des fonctions d'éclairage ou de signalisation. Par exemple, la première lumière peut participer à une fonction d'éclairage, comme par exemple un feu de croisement/feu de route, et la seconde lumière peut participer à une fonction de signalisation, comme par exemple un feu de position ou un feu diurne (parfois appelé DRL (pour « Daytime running Light (or Lamp) » - signalisation lumineuse allumée automatiquement lorsque le véhicule est mis en fonctionnement)).

Comme le sait l'homme de l'art, pour cacher partiellement la lampe, au moins dans une direction d'observation prédéfinie (comme par exemple de ¾ avant), notamment pour éviter qu'elle éblouisse des passants, on place au voisinage de cette lampe un écran métallique (ou cache lampe). Ce dernier résiste bien à la chaleur et protège relativement bien les diodes électroluminescentes contre la chaleur dégagée par la lampe. Cependant, il s'avère inesthétique au sein d'un bloc optique et sa forme s'avère difficilement modifiable du fait qu'il doit assurer une fonction de bouclier thermique pour les diodes électroluminescentes, et donc il nuit aux effets de style.

L'invention a donc pour but d'améliorer la situation.

Elle propose notamment à cet effet un bloc optique de véhicule automobile selon les caractéristiques de la revendication 1.

On obtient ainsi un écran qui assure au moins trois fonctions, à savoir une fonction de masquage de lampe, une fonction de bouclier thermique et une fonction anti fuites de lumière, tout en permettant des déclinaisons multiples de sa première partie en fonction des effets de style désirés.

L'écran selon l'invention peut comporter d'autres caractéristiques qui peuvent être prises séparément ou en combinaison, et notamment :
∘ avantageusement sa seconde partie peut comprendre des premiers moyens de fixation propres à coopérer avec des seconds moyens de fixation définis sur l'embase de manière à permettre la solidarisation de cette dernière à la seconde partie ;
∘ dans une variante plus particulièrement préférée, les premiers moyens de fixation peuvent comprendre au moins un trou destiné à permettre le vissage d'une vis via un autre trou défini dans la seconde partie et faisant partie des seconds moyens de fixation;
   - il peut être réalisé dans un polycarbonate résistant aux hautes températures.

L'invention propose également un véhicule, éventuellement de type automobile, et comprenant au moins deux blocs optiques du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective, une partie d'un exemple de réalisation d'un bloc optique équipé d'un exemple de réalisation d'un écran selon l'invention,
- la figure 2 illustre schématiquement, dans une vue en perspective du dessus, une partie du bloc optique de la figure 1, et
- la figure 3 illustre schématiquement, dans une vue en perspective, l'écran du bloc optique des figures 1 et 2, avant assemblage.

L'invention a notamment pour but de proposer un écran EC destiné à faire partie d'un bloc optique BO multifonctions, de type feu avant, devant équiper un véhicule, éventuellement de type automobile.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout véhicule comprenant au moins un feu avant multifonctions, et notamment les véhicules terrestres, maritimes (ou fluviaux), et aériens.

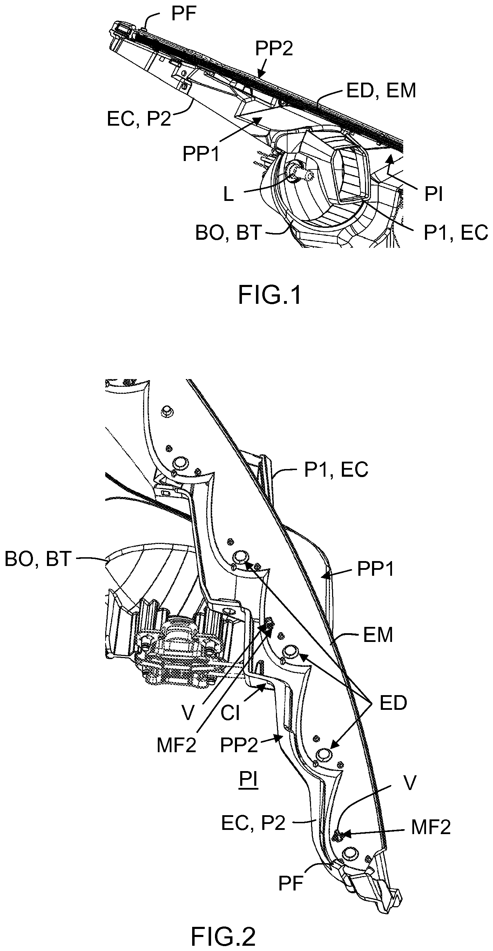

On a schématiquement illustré sur la figure 1 une petite partie d'un exemple de bloc optique BO selon l'invention. Bien que cela n'apparaisse que partiellement, voire pas du tout, un tel bloc optique BO multifonctions comprend au moins un boîtier BT, une lampe L, un écran EC, un ensemble de diodes électroluminescentes (ou LEDs) ED, une glace, ainsi qu'un éventuel masque.

Le boîtier BT est par exemple réalisé par moulage dans un matériau plastique ou synthétique. Il définit au moins un logement interne dans lequel sont logés et solidarisés les éléments précités (hormis la glace puisqu'elle ferme la partie avant du boîtier BT).

La lampe (ou ampoule) L est agencée de manière à délivrer une première lumière destinée à assurer au moins partiellement une première fonction d'éclairage ou de signalisation. Par exemple, cette première lumière participe à une fonction d'éclairage, comme par exemple un feu de croisement/feu de route. L'ensemble de diodes électroluminescentes ED est agencé de manière à délivrer une seconde lumière destinée à assurer au moins partiellement une seconde fonction d'éclairage ou de signalisation. Par exemple, cette seconde lumière participe à une fonction de signalisation, comme par exemple un feu de position ou un feu diurne (ou DRL).

On entend ici par « assurer au moins partiellement » le fait d'assurer une fonction seul ou bien en collaboration avec un autre moyen. Par exemple, la lumière émise par la lampe L ou les diodes électroluminescentes ED peut être au moins partiellement collectée par des moyens de traitement, tels qu'un guide de lumière ou un réflecteur afin d'être transférée dans un endroit choisi, ou qu'un collimateur.

On notera, comme illustré non limitativement sur la figure 2, que l'ensemble de diodes électroluminescentes ED peut, par exemple, être installé sur une embase EM.

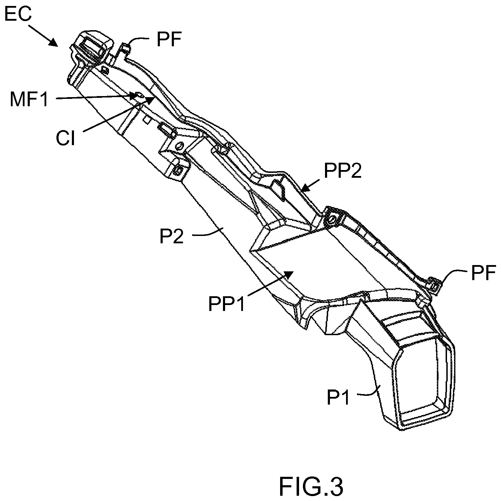

Comme cela est mieux illustré sur les figures 2 et 3, un écran EC, selon l'invention, comprend une première partie P1 et une seconde partie P2, solidarisées l'une à l'autre.

On notera, comme illustré non limitativement sur la figure 3, que les première P1 et seconde P2 parties font de préférence partie intégrante d'une même pièce. Cette dernière peut, par exemple, être réalisée par moulage dans un matériau plastique ou synthétique sur lequel on reviendra plus loin.

La première partie P1 de l'écran EC est destinée à être placée au voisinage de la lampe L, et est agencée pour masquer partiellement cette dernière (L).

Le masquage de la lampe L est partiel du fait que l'on doit laisser passer la première lumière qu'elle produit afin de ne pas diminuer la performance d'éclairage de la première fonction à laquelle elle participe. Par exemple, ce masquage est destiné à masquer la lampe L lorsqu'elle est observée de ¾ avant.

Dans l'exemple illustré non limitativement sur les figures 1 et 3, la première partie P1 présente une portion en forme de cadre bien adaptée au passage de la première lumière, quasiment sans perte. Mais d'autres formes peuvent être envisagées selon l'effet de style recherché.

On notera que la forme de la première partie P1 peut être éventuellement choisie de manière à conférer une forme choisie à la première lumière qui est délivrée par la lampe L.

La seconde partie P2 de l'écran EC est placée entre la lampe L et une partie au moins de l'ensemble de diodes électroluminescentes ED, et est agencée, d'une part pour empêcher le passage de la seconde lumière dans une partie interne PI du bloc optique BO, et, d'autre part, pour définir, conjointement avec la première partie P1, un bouclier thermique qui est propre à protéger au moins l'ensemble de diodes électroluminescentes ED contre la chaleur qui est produite par cette lampe L.

Le bouclier thermique étant désormais assuré conjointement par les première P1 et seconde P2 parties, cela donne beaucoup plus de flexibilité pour les adaptations de la première partie P1 aux effets de style désirés.

On notera que lorsque le bloc optique BO comprend un masque à proximité de la lampe L, les première P1 et seconde P2 parties de l'écran EC définissent un bouclier thermique propre à protéger une partie au moins de ce masque.

Par ailleurs, l'écran EC assure désormais au moins trois fonctions et non plus une seule, et plus précisément une fonction de masquage de la lampe L, une fonction de bouclier thermique, et une fonction anti fuites de la seconde lumière (générée par l'ensemble de diodes électroluminescentes ED).

Afin d'assurer sa fonction de bouclier thermique, l'écran EC peut, par exemple, être réalisé par moulage dans un polycarbonate (ou PC) résistant aux hautes températures (typiquement à environ 200°C). Ce matériau synthétique est avantageux car il permet l'obtention de diverses formes, éventuellement complexes, par moulage.

Comme illustré non limitativement sur les figures 2 et 3, la seconde partie P2 de l'écran EC comprend une paroi principale PP1 et une paroi périphérique PP2 solidarisées l'une à l'autre.

Cette paroi principale PP1 est intercalée entre la lampe L et une partie au moins de l'ensemble de diodes électroluminescentes ED, afin d'assurer les fonctions de bouclier thermique et anti fuites de lumière. Comme illustré, elle peut comporter plusieurs sous-parties placées éventuellement à des niveaux légèrement différents.

La paroi périphérique PP2 est érigée sensiblement perpendiculairement à un côté interne CI de la paroi principale PP1 qui est orienté vers la partie interne PI du bloc optique BO. Etant placée derrière les diodes électroluminescentes ED, du côté interne du boîtier BT, et donc du côté opposé à la glace par laquelle les photons de la seconde lumière doivent sortir du boîtier BT, elle est plus particulièrement destinée à assurer la fonction anti fuites de lumière.

La paroi périphérique PP2 peut également, comme illustré non limitativement sur la figure 3, comporter au moins une patte de fixation PF agencée de manière à permettre sa solidarisation au boîtier BT ou à un autre élément installé dans ce dernier (BT). Dans l'exemple illustré, elle comprend une patte de clippage située à l'extrémité opposée à la première partie P1, et une patte munie d'un trou adapté au passage d'une vis et située au voisinage de la première partie P1.

On notera, comme illustré non limitativement sur les figures 1 et 2, que la seconde partie P2 de l'écran EC peut également et avantageusement comprend des premiers moyens de fixation MF1 propres à coopérer avec des seconds moyens de fixation MF2 définis sur l'embase EM de manière à permettre la solidarisation de cette dernière (EM) à la seconde partie P2.

Dans ce cas, l'écran EC remplie une fonction complémentaire de support de l'embase EM sur laquelle est solidarisé l'ensemble de diodes électroluminescentes ED.

Par exemple, et comme illustré non limitativement sur les figures 2 et 3, les premiers moyens de fixation MF1 peuvent comprendre au moins un trou destiné à permettre le vissage d'une vis V via un autre trou correspondant qui est défini dans la seconde partie P2 et qui fait partie des seconds moyens de fixation MF2. En variante ou en complément, les premiers MF1, respectivement seconds MF2, moyens de fixation peuvent comprendre au moins une patte de clippage comprenant une extrémité propre à traverser un trou correspondant des seconds MF2, respectivement premiers MF1, moyens de fixation.

## Revendications

1. Bloc optique (BO) de véhicule comprenant une lampe (L) et un ensemble de diodes électroluminescentes (ED) situées à proximité l'une de l'autre, et propres à délivrer respectivement des première et seconde lumières, ledit bloc comprenant un écran placé au voisinage de ladite lampe (L), **caractérisé en ce que** ledit écran comprend i) une première partie (P1) placée au voisinage de ladite lampe (L) et agencée pour masquer partiellement cette dernière (L), et ii) une seconde partie (P2) comprenant une paroi principale (PP1), intercalée entre ladite lampe (L) et une partie au moins d'une embase sur laquelle est solidarisé l'ensemble de diodes électroluminescentes (ED), et une paroi périphérique (PP2) érigée sensiblement perpendiculairement à un côté interne (CI) de ladite paroi principale (PP1), orienté vers ladite partie interne (PI) du bloc optique (BO) ; ladite paroi principale (PP1) ainsi agencée empêchant d'une part le passage de ladite seconde lumière dans la partie interne (PI) dudit bloc optique (BO), et définissant, conjointement avec ladite première partie (P1), un bouclier thermique propre à protéger au moins ledit ensemble de diodes électroluminescentes (ED) contre la chaleur produite par ladite lampe (L).

2. Bloc optique (BO) Bloc optique (BO) selon la revendication 1, **caractérisé en ce que** lesdites première (P1) et seconde (P2) parties font partie intégrante d'une même pièce.

3. Bloc optique (BO) selon l'une des revendications 1 ou 2, **caractérisé en ce que** ladite seconde partie (P2) comprend des premiers moyens de fixation (MF1) coopérant avec des seconds moyens de fixation (MF2) définis sur ladite embase (EM) de manière à permettre la solidarisation de cette dernière (EM) à ladite seconde partie (P2).

4. Bloc optique (BO) selon la revendication 3, **caractérisé en ce que** lesdits premiers moyens de fixation (MF1) comprennent au moins un trou destiné à permettre le vissage d'une vis (V) via un autre trou défini dans ladite seconde partie (P2) et faisant partie desdits seconds moyens de fixation (MF2).

5. Bloc optique (BO) selon l'une des revendications 1 à 4, **caractérisé en ce que** l'écran est réalisé dans un polycarbonate résistant aux hautes températures.

6. Véhicule, **caractérisé en ce qu'**il comprend au moins deux blocs optiques (BO) selon l'une des revendications précédentes.

## Patentansprüche

1. Optische Einheit (BO), die eine Lampe (L) und eine Einheit Licht emittierender Dioden (ED), die in der Nähe voneinander liegen, umfasst, und die geeignet sind, jeweils ein erstes und ein zweites Licht zu liefern, wobei die optische Einheit einen Schirm umfasst, der in der Nähe der Lampe (L) platziert ist, **dadurch gekennzeichnet, dass** der Schirm i) einen ersten Teil (P1) umfasst, der in der Nähe der Lampe (L) platziert und eingerichtet ist, um diese Letztere (L) teilweise zu maskieren, und ii) einen zweiten Teil (P2), der eine Hauptwand (PP1) umfasst, die zwischen der Lampe (L) und einem Teil mindestens einer Grundplatte eingefügt ist, auf der die Einheit Licht emittierender Dioden (ED) fest verbunden ist, und eine Umfangswand (PP2), die im Wesentlichen senkrecht zu einer internen Seite (CI) der Hauptwand (PP1) zu dem inneren Teil (PI) der optischen Einheit (BO) ausgerichtet errichtet ist; wobei die derart eingerichtete Hauptwand (PP1) einerseits das Durchgehen des zweiten Lichts in dem internen Teil (PI) der optischen Einheit (BO) verhindert und gemeinsam mit dem ersten Teil (P1) einen Hitzeschild definiert, der geeignet ist, um mindestens die Einheit Licht emittierende Dioden (ED) vor der Hitze, die von der Lampe (L) erzeugt wird, zu schützen.

2. Optische Einheit (BO) nach Anspruch 1, **dadurch gekennzeichnet, dass** der erste (P1) und der zweite Teil (P2) fester Bestandteil desselben Teils sind.

3. Optische Einheit (BO) nach einem der Ansprüche 1 oder 2, **dadurch gekennzeichnet, dass** der zweite Teil (P2) erste Befestigungsmittel (MF1) umfasst, die mit zweiten Befestigungsmitteln (MF2), die auf der Grundplatte (EM) definiert sind, derart zusammenwirken, dass das feste Verbinden dieser Letzteren (EM) an dem zweiten Teil (P2) erlaubt wird.

4. Optische Einheit (BO) nach Anspruch 3, **dadurch gekennzeichnet, dass** die ersten Befestigungsmittel (MF1) mindestens eine Bohrung umfassen, die dazu bestimmt ist, das Einschrauben einer Schraube (V) über eine andere Bohrung, die in dem zweiten Teil (P2) definiert ist und die Teil der zweiten Befestigungsmittel (MF2) ist, zu erlauben.

5. Optische Einheit (BO) nach einem der Ansprüche 1 bis 4, **dadurch gekennzeichnet, dass** der Schirm aus einem Polycarbonat hergestellt ist, das hohen Temperaturen standhält.

6. Fahrzeug, **dadurch gekennzeichnet, dass** es mindestens zwei optische Einheiten (BO) nach einem der vorstehenden Ansprüche umfasst.

## Claims

1. A vehicle optical unit (BO) including a lamp (L) and a set of light emitting diodes (ED) which are situated close to one another, and able to deliver respectively first and second lights, said unit including a screen placed in the vicinity of said lamp (L), **characterized in that** said screen includes i) a first part (P1) placed in the vicinity of the said lamp (L) and arranged to partially mask the latter (L), and ii) a second part (P2) including a main wall (PP1), intercalated between said lamp (L) and a portion at least of a base on which the set of light emitting diodes (ED) is secured, and a peripheral wall (PP2), erected substantially perpendicularly to an internal side (CI) of said main wall (PP1), oriented towards said internal part (PI) of the optical unit (BO); said main wall (PP1) thus arranged preventing on the one hand the passage of said second light in the internal part (PI) of said optical unit (BO), and defining, in conjunction with said first part (P1) a heat shield able to protect at least said set of light emitting diodes (ED) against the heat produced by said lamp (L) .

2. The optical unit (BO) according to Claim 1, **characterized in that** said first (P1) and second (P2) parts form an integral part of the same piece.

3. The optical unit (BO) according to one of Claims 1 or 2, **characterized in that** said second part (P2) includes first attachment means (MF1) cooperating with second attachment means (MF2) defined on said base (EM) so as to permit the securing of the latter (EM) to said second part (P2).

4. The optical unit (BO) according to Claim 3, **characterized in that** said first attachment means (MF1) include at least one hole intended to permit the screwing of a screw (V) via another hole defined in said second part (P2) and forming part of said second attachment means (MF2).

5. The optical unit (BO) according to one of Claims 1 to 4, **characterized in that** the screen is made from a polycarbon which is resistant to high temperatures.

6. A vehicle, **characterized in that** it includes at least two optical units (BO) according to one of the preceding claims.
